# EUROPÄISCHE PATENTSCHRIFT

(11) **EP 1 099 991 B1**
(45) Veröffentlichungstag und Bekanntmachung des Hinweises auf die Patenterteilung: **02.10.2002**
(21) Anmeldenummer: 00123813.8
(22) Anmeldetag: 02.11.2000
(51) Int. Cl.: G05B 13/00, B66B 1/46

(54) **Verfahren zur Konfiguration von Aufzugssteuerungen**
Method for configuring elevator controllers
Procédé de configuration d'organes de commande pour ascenceurs

(30) Priorität: 11.11.1999 EP 99811035
(43) Veröffentlichungstag der Anmeldung: 16.05.2001
(73) Patentinhaber: INVENTIO AG, CH-6052 Hergiswil (CH)
(72) Erfinder: Henneau, Philippe, 6004 Luzern (CH)

(56) Entgegenhaltungen:
- US-A- 4 490 775
- US-A- 4 972 470
- PATENT ABSTRACTS OF JAPAN vol. 1996, no. 07, 31. Juli 1996 (1996-07-31) & JP 08 076903 A (FUJITSU LTD), 22. März 1996 (1996-03-22)

## Beschreibung

Die Erfindung betrifft ein Verfahren zur Konfiguration von Aufzugssteuerungen, die im Wesentlichen aus einem Steuerungs-Prozessor, einem Eingangs/Ausgangs-Bauteil mit Anschlussstellen für dezentral angeordnete Signalgeber und Signalempfänger sowie aus diesen Signalgebern und Signalempfängern selbst bestehen.

An Steuerungen von Aufzugsanlagen wird eine Vielzahl von unterschiedlichen externen Signalgebern und Signalempfängern angeschlossen, wobei deren Funktion und Anzahl oft zum Zeitpunkt der Werkskonfiguration nicht definitiv festgelegt sind. Beispielsweise kann die Anzahl anzufahrender Stockwerke mit den erforderlichen Ruftasten, Anzeigen, Stockwerkschaltern, etc., nachträglich erhöht werden, oder der Kunde wünscht zusätzliche steuerungsabhängige Sicherheitsvorkehrungen oder neue Vorschriften erfordern veränderte Steuerungsfunktionen. Üblicherweise sind definierten Ein- oder Ausgangssignalen des Steuerungs-Prozessors definierte Anschlussstellen auf einem Eingangs/Ausgangs-Bauteil zugeordnet, wobei diese Zuordnung nur mit erheblichem Aufwand und Fehlerrisiko veränderbar ist.

Aus US 4,490,775 ist ein "universell programmierbares Interface" bekannt, das die freie Zuordnung von Anschlussklemmen auf einer Leiterplatte zu auf beidseitig derselben Leiterplatte angeordneten, als Leiterbahnen ausgeführten Steckkontakten ermöglicht, die z. B. mit den Ein- und Ausgängen eines Mikroprozessors verbunden sind. Die Anschlussklemmen, wie auch die Steckkontakte sind durch ebenfalls beidseitig der Leiterplatte aufgebrachte Leiterbahnen zu die Leiterplatte durchdringenden Stützpunkten geführt. Eine gegenseitige Zuordnung von jeweils einer Anschlussklemme zu einem Steckkontakt erfolgt durch Anbringen einer Drahtbrücke zwischen den zwei mit diesen verbundenen Stützpunkten.

Bei diesem Verfahren ist es erforderlich, dass eine Person, die Steuerungsänderungen oder -ergänzungen und die entsprechende Zuordnung von Anschlussstellen zu Ein- und Ausgängen einer Steuerung vor Ort vorzunehmen hat, über entsprechende Fach- und Schemakenntnisse verfügt. Ausserdem sind die Arbeiten zeitraubend und verursachen entsprechend lange Stillstandszeiten des Aufzugs, insbesondere, weil bei Anpassungen vor Ort oft auch Fehler gemacht werden.

Der Erfindung liegt die Aufgabe zugrunde, ein Verfahren zur Konfiguration von Aufzugssteuerungen zu schaffen, das schnell und fehlerfrei die Zuordnung von Ein- und Ausgangssignalen eines Steuerungs-Prozessors zu frei wählbaren Anschlussstellen von externen Signalgebern und Signalempfängern wie Endschalter, Sensoren, Anzeigegeräte, Alarmsignale, etc, ermöglicht. ohne dass besondere Steuerungs-Fachkenntnisse erforderlich sind, ohne dass Verdrahtungsanpassungen durchzuführen sind und ohne dass der Steuerungs-Prozessor vor Ort umprogrammiert werden muss.

Erfindungsgemäss werden bei einer Aufzugssteuerung diese Eigenschaften durch ein Konfigurationsverfahren erreicht, bei dem die externen Signalgeber und Signalempfänger an frei wählbaren, auf einem Eingangs/Ausgangs-Bauteil angeordneten Anschlussstellen angeschlossen werden können, indem den belegten Anschlusstellen je mindestens ein programmiertes, vorzugsweise steckbares Anschluss-Konfigurationsmodul zugeordnet wird, das dem Steuerungs-Prozessor die erforderlichen Informationen über Art und Funktion des an der korrespondierenden Anschlussstelle angeschlossenen Signalgebers oder Signalempfängers liefert.

Mit dem erfindungsgemässen Verfahren werden wesentliche Vorteile erreicht. Es ermöglicht eine schnelle und fehlerfreie Konfiguration einer Aufzugssteuerung durch Personen, die nicht über besondere Kenntnisse in Steuerungs- und Programmiertechnik verfügen. Für infolge von anlagespezifischen Besonderheiten, örtlichen Sicherheitsvorschriften oder späteren Aus- oder Umbauten der Aufzugsanlage erforderliche Vor-Ort-Anpassungen der Anschluss-Konfiguration an geänderte oder zusätzliche Signalgeber und Signalempfänger sind weder zeitraubende Eingriffe in einer Verdrahtung noch Programmänderungen im Steuerungs-Prozessor notwendig. Solche Anpassungen können ebenfalls durch Personen ohne vertiefte Steuerungsund Programmierkenntnisse realisiert werden, indem es die neuen Signalgeber und -empfänger an frei wählbaren Anschlussstellen anschliesst und die den zugehörigen Funktionen entsprechenden, im Werk programmierten Konfigurationsmodule an den korrespondierenden Einbaustellen montiert, was vorzugsweise durch Einstecken der Module in Steckplätze geschieht. Anschlussfehler und Programmierfehler sind damit praktisch ausgeschlossen, wodurch unnötige Stillstandszeiten der Aufzugsanlage vermieden werden.

Ausserdem werden mit diesem Verfahren ungenutzte Anschlussstellen und der entsprechende Einbauraum eingespart, da solche nur für die Anzahl effektiv installierter Signalgeber und Signalempfänger vorhanden sein müssen und nicht fest zugeordnete Anschlussstellen für jedes unterschiedliche Gerät und jede unterschiedliche Funktion in der jeweils maximal möglichen Anzahl erforderlich sind.

Vorteilhafte Ausgestaltungen und Weiterbildungen der Erfindung gehen aus den Unteransprüchen hervor.

In einer bevorzugten Ausführungsform des erfindungsgemässen Verfahrens erfolgt der Informationsfluss zwischen den auf dem Eingangs/Ausgangs-Bauteil angeordneten Anschluss-Konfigurationsmodulen und dem Steuerungs-Prozessor über ein geeignetes Bus-System. Das Bus-System bildet eine einfache Kommunikationsverbindung zwischen einer grossen und variablen Anzahl von Konfigurationsmodulen und dem Steuerungs-Prozessor, wobei dieser auch ein einem Haupt-Prozessor untergeordneter Teil eines dezentralen Aufzugssteuerungsystems sein kann. Jedes Konfigurationsmodul enthält eine einprogrammierte Bus-Adresse, die für jede durch das Modul repräsentierte Funktion eines zugeordneten Signalgebers oder Signalempfängers eindeutig und einzigartig ist.

Gemäss einer weiteren Ausgestaltung der Erfindung sind an das erwähnte Bus-System auch programmierte Instruktions-Konfigurationsmodule ankoppelbar, die dem Steuerungs-Prozessor anlagenspezifische Instruktionen liefern. Solche Informationen beziehen sich beispielsweise auf zum Zeitpunkt der Werksprogrammierung des Steuerungs-Prozessors noch nicht definitiv bekannte Besonderheiten einer Aufzugsanlage oder auf Prozesse und Daten, die nachträglichen Änderungen unterworfen, d. h. von länderspezifischen Vorschriften, Gebäudeveränderungen, Komfortverbesserungen, klimatischen Bedingungen, etc., abhängig sind. Mit einem solchen System wird grösstmögliche Flexibilität für eine im Kern einheitliche Aufzugssteuerung erreicht, wobei Aufwand und Fehlerrisiko für Umprogrammierungen vermieden werden.

Vorzugsweise werden als Konfigurationsmodule Speicherchips oder Prozessorchips eingesetzt, die problemlos im Handel erhältlich und mit üblichen Mitteln programmierbar sind.

Besondere Vorteile werden mit dem vorgeschlagenen System dadurch erreicht, dass die Werksprogrammierung der Steuerungs-Prozessoren für eine Vielzahl von Steuerungsvarianten erfolgt, die für die Lieferversion eines Aufzugs noch nicht zum Einsatz kommen, die aber als mit einiger Wahrscheinlichkeit in fernerer Zukunft erforderlich betrachtet werden. Im späteren Bedarfsfall werden durch Ankoppeln entsprechender Konfigurationsmodule an das erwähnte Bus-System solche Steuerungsvarianten mit den dafür notwendigen Anschlussstellen für Signalgeber oder Signalempfänger automatisch aktiviert. Dieses Verfahren ermöglicht bei minimalen Stillstandszeiten fehlerfreie Anpassungen von Steuerungsfunktionen durch Aufzugfachleute, die nicht über besondere Kenntnisse von Steuerungs- oder Programmiertechniken verfügen.

Das in Unteranspruch 6 beschriebene Anschluss-Konfigurationsverfahren hat den Vorteil, dass als Anschluss-Konfigurationsmodule relativ einfache und bei einer Vielzahl von Lieferanten erhältliche Speicherchips verwendet werden können.

Das in Unteranspruch 7 beschriebene Anschluss-Konfigurationsverfahren basiert auf der Anwendung von sogenannten "Adressierbaren Schaltern" mit integrierten Datenspeichern, die über ein Bus-System mit dem Steuerungs-Prozessor und über eine direkte Verbindungsleitung mit der korrespondierenden Anschlussstelle verbunden sind. Dabei liefern diese Anschluss-Konfigurationsmodule einerseits dem Steuerungs-Prozessor gespeicherte Informationen über Art und Funktion der an den korrespondierenden Anschlussstellen angeschlossen Signalgeber und Signalempfänger, und andererseits können sie vom Steuerungs-Prozessor über den Bus veranlasst werden, über die direkte Verbindungsleitung ein Ausgangssignal auf die korrespondierende Anschlussstelle zu generieren oder ein dort anliegendes Signal zu erfassen und über den Bus an den Steuerungs-Prozessor zu melden. Mit diesem Verfahren sind keine separaten Ein- und Ausgänge am Steuerungs-Prozessor mit zugehörigen Verbindungsleitungen zu den Anschlussstellen erforderlich, wodurch ein besonders einfaches und übersichtliches System erreicht wird.

Vorzugsweise sind die Konfigurationsmodule als steckbare Einheiten ausgeführt, die in Steckplätze einsteckbar sind, welche auf dem Eingangs/Ausgangs-Bauteil angeordnet sind und über das Bus-System mit dem Steuerungs-Prozessor verbunden sind. Mittels klaren Markierungen auf dem üblicherweise als gedruckte Schaltung ausgeführten Eingangs/Ausgangs-Bauteil ist die Zuordnung der Anschluss-Konfigurationsmodul-Steckplätze zu ihren korrespondierenden Anschlussstellen gekennzeichnet. Dank diesen Ausgestaltungen der Erfindung sind Einbau oder Austausch der Konfigurationsmodule mit minimalem Zeitaufwand und mit geringstem Fehlerrisiko möglich.

Eine weitere Anwendungserleichterung wird dadurch erreicht, dass die Konfigurationsmodule mit Kurzzeichen markiert sind, die die Steuerungsfunktion symbolisieren, für welche sie programmierte Instruktionen liefern. Anzuschliessende Signalgeber und Signalempfänger sind ebenfalls mit den entsprechenden Kurzzeichen gekennzeichnet.

Eine wesentliche Vereinfachung der Administration und der Aktualisierung der Anlagen-Dokumentation wird dadurch erreicht, dass der Steuerungs-Prozessor aufgrund der Zuordnung der eingesteckten Anschluss-Konfigurationsmodule zu den korrespondierenden Anschlussstellen sowie aufgrund der in diesen wie auch in den eingesteckten Instruktions-Konfigurationsmodulen programmierten Instruktionen die erforderlichen Daten für den Ausdruck eines Schemas liefert, das die effektiv vorhandene Anschlusskonfiguration und die mittels Instruktions-Konfigurationsmodulen definierten spezifischen Bedingungen dokumentiert.

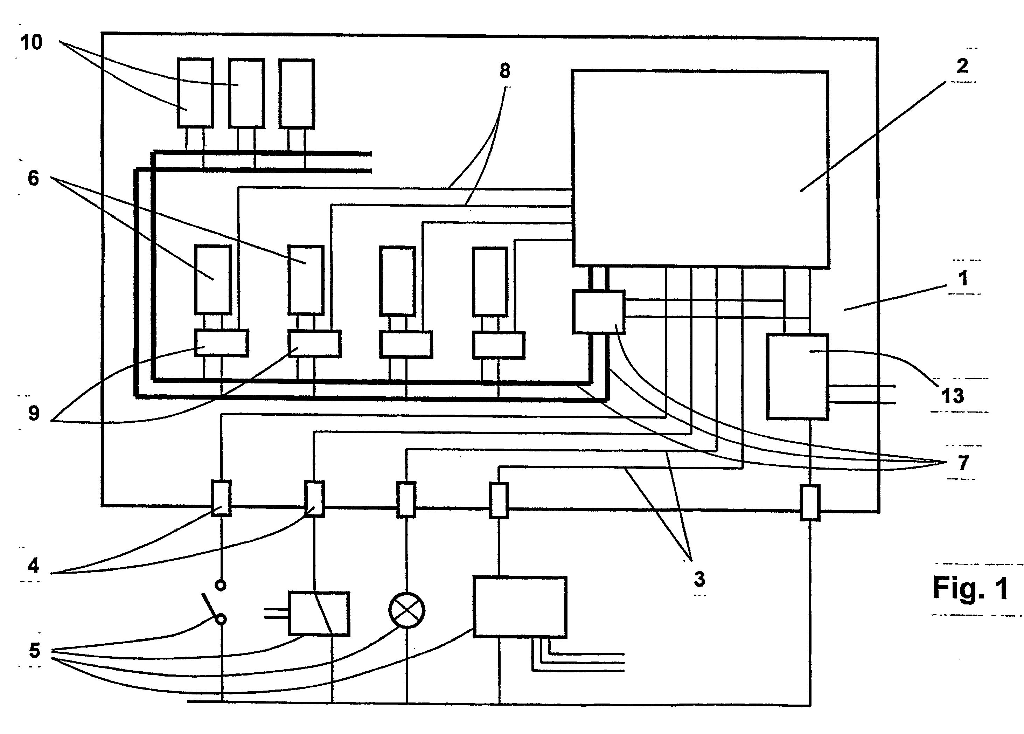

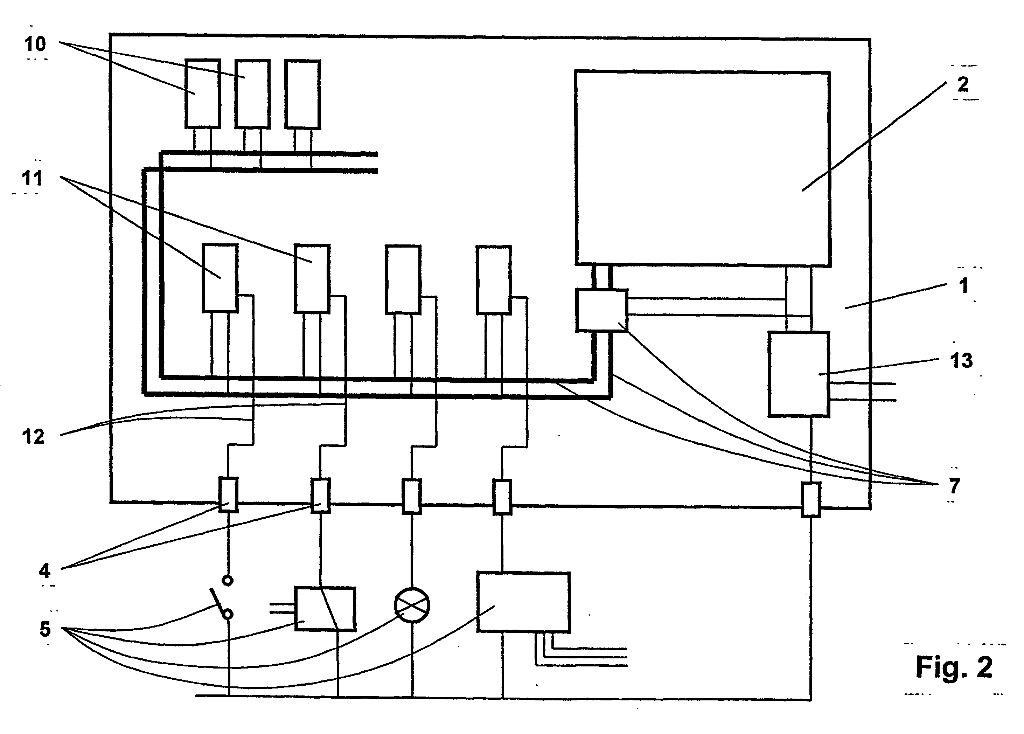

Ausführungsbeispiele der Erfindung sind in Fig. 1 und 2 dargestellt und in der nachfolgenden Beschreibung näher erläutert.
- Fig. 1: zeigt schematisch die Anordnung einer erfindungsgemässen Aufzugsteuerung mit Anschluss-Konfigurationsmodulen bei der die Anschlusstellen direkt mit Ein- und Ausgängen des Steuerungs-Prozessors verbunden sind.
- Fig. 2: zeigt schematisch die Anordnung einer erfindungsgemässen Aufzugsteuerung mit "Adressierbaren Schaltern" als Anschluss-Konfigurationsmodule, bei der diese Anschluss-Konfigurationsmodule, vom Steuerungs-Prozessor über ein Bus-System gesteuert, selbst Signale an externe Signalempfänger erzeugen und Signale von externen Signalgebern empfangen und weiterleiten.

In Fig. 1 ist ein als gedruckte Schaltung ausgeführtes Eingangs/Ausgangs-Bauteil 1 einer Aufzugsteuerung schematisch dargestellt, auf dem ein Steuerungs-Prozessor 2 integriert ist. Selbstverständlich könnte dieser Prozessor 2 auch auf einem separaten Bauteil montiert sein. Am unteren Rand des Eingangs/Ausgangs-Bauteils 1 sind über Anschlussleitungen 3 einzeln mit den Ein- und Ausgängen des Steuerungs-Prozessors 2 verbundene Anschlussstellen 4 zu sehen, an welche externe Signalgeber und Signalempfänger 5 angeschlossen sind. Jeder dieser Anschlussstellen ist ein Anschluss-Konfigurationsmodul A 6 zugeordnet, das über ein Bus-System 7 mit dem Steuerungs-Prozessor 2 verbunden ist und programmierte Informationen und Instruktionen betreffend den an der korrespondierenden Anschlussstelle 4 angeschlossenen Signalgeber oder Signalempfänger 5 enthält. Über Selektorleitungen 8 kann der Steuerungs-Prozessor 2 mit Hilfe der Selektorschalter 9 die Anschluss-Konfigurationsmodule A 6 aktivieren oder deaktivieren. An die Leitungen desselben Bus-Systems 7 sind auch Instruktions-Konfigurationsmodule 10 angekoppelt und somit mit dem Steuerungs-Prozessor 2 verbunden, die über integrierte programmierbare Datenspeicher verfügen. Zur Vervollständigung ist mit 13 ein Netzgerät mit Leistungsanschluss für die Speisung des Steuerungs-Prozessors und des Bus-Systems dargestellt.

Das erfindungsgemässe Konfigurationsverfahren funktioniert mit den in Fig. 1 dargestellten Komponenten wie folgt: Bei Initialisierung der Aufzugsteuerung erzeugt in einem ersten Schritt der Steuerungs-Prozessor 2 ein Reset-Kommando auf das die Konfigurationsmodule 6, 10 verbindende Bus-System, was alle auf dem Eingangs/Ausgangs-Bauteil 1 montierten Konfigurationsmodule 6, 10 veranlasst, ihre Adresse via Bus-System 7 an den Steuerungs-Prozessor 2 zu melden, der diese Adressen registriert. In einem zweiten Schritt aktiviert der Steuerungs-Prozessor 2 über die erwähnten Selektorleitungen 8 und die Selektor-Schalter 9 der Reihe nach jedes Anschluss-Konfigurationsmodul A 6 und initiiert jeweils gleichzeitig ein Identifikationskommando auf das Bus-System 7, worauf das jeweils aktivierte Anschluss-Konfigurationsmodul A 6 erneut seine Adresse an den Steuerungs-Prozessor 2 meldet, der daraus die Zuordnung dieses Anschluss-Konfigurationsmoduls zur korrespondierenden Anschlussstelle 4 und somit zum daran angeschlossenen Signalgeber oder Signalempfänger 5 erkennt und diese Zuordnung zusammen mit den im Anschluss-Konfigurationsmodul A 6 gespeicherten Instruktionen registriert. In einem letzten Initialisierungsschritt werden auch die in den Instruktions-Konfigurationsmodulen 10 enthaltenen anlagespezifischen Instruktionen über das Bus-System 7 in den Steuerungs-Prozessor 2 eingelesen.

Fig. 2 zeigt ein Bingangs/Ausgangs-Bauteil 1, das im Wesentlichen gleiche Komponenten wie das in Fig. 1 beschriebene aufweist und auch dasselbe Verfahren zur Konfiguration von Aufzugssteuerungen ermöglicht. Als Anschluss-Konfigurationsmodule B 11 werden hier jedoch handelsübliche, sogenannte "Adressierbare Schalter" mit integrierten programmierbaren Datenspeichern verwendet, die ebenfalls über ein Bus-System 7 mit dem Steuerungs-Prozessor 2 in Verbindung stehen. Ein solches Anschluss-Konfigurationsmodul B 11 ist, wenn es über das Bus-System 7 vom Steuerungs-Prozessor 2 dazu veranlasst wird, in der Lage, über eine direkte Verbindungsleitung 12 ein Ausgangssignal auf die korrespondierende Anschlussstelle 4 zu generieren oder ein dort anliegendes Signal zu erfassen und über das Bus-System 7 an den Steuerungs-Prozessor 2 zu melden. Im Unterschied zum mit Fig. 1 erläuterten Verfahren ist hier bei der Initialisierung der Aufzugssteuerung keine Zuordnung von Anschluss-Konfigurationsmodulen und Signalgebern oder Signalempfängern zu bestimmten Ein- oder Ausgängen des Steuerungs-Prozessors 2 erforderlich, da die Signale dieser Geräte über die jeder Anschlussstelle zugeordneten Anschluss-Konfigurationsmodule B 11 und das Bus-System 7 laufen und über die jeweiligen Bus-Adressen identifiziert sind. Die programmierter Datenspeicher der Anschluss-Konfigurationsmodule B 11 liefern bei der Initialisierung der Aufzugssteuerung über das Bus-Systems 7 dem Steuerungs-Prozessor 2 ebenfalls programmierte Informationen und Instruktionen betreffend den an der korrespondierenden Anschlussstelle 4 angeschlossenen Signalgeber oder Signalempfänger 5. Auch auf dem hier beschriebenen Eingangs/Ausgangs-Bauteil 1 sind Instruktions-Konfigurationsmodule 10 am Bus-System 7 angeschlossen, die in ihren programmierbaren Datenspeichern anlagenspezifische Informationen und Instruktionen enthalten, die bei der Initialisierung der Aufzugssteuerung vom Steuerungs-Prozessor 2 abgerufen und gespeichert werden.

### Bezugszeichenliste:

- 1.: Bingangs/Ausgangs-Bauteil
- 2.: Steuerungs-Prozessor
- 3.: Anschlussleitungen
- 4.: Anschlussstelle
- 5.: Signalgeber oder Signalempfänger
- 6.: Anschluss-Konfigurationsmodul A
- 7.: Bus-System
- 8.: Selektorleitung
- 9.: Selektorschalter
- 10.: Instruktions-Konfigurationsmodul
- 11.: Anschluss-Konfigurationsmodul B
- 12.: Verbindungsleitung
- 13.: Netzgerät

## Patentansprüche

1. Verfahren zur Konfiguration von Aufzugssteuerungen, die im Wesentlichen aus einem Steuerungs-Prozessor (2), einem Eingangs/Ausgangs-Bauteil (1) mit Anschlussstellen (4) für dezentral angeordnete Signalgeber und Signalempfänger (5) sowie aus diesen Signalgebern und Signalempfängern selbst bestehen,
**dadurch gekennzeichnet, dass** die externen Signalgeber und Signalempfänger (5) an frei wählbaren, auf einem Eingangs/Ausgangs-Bauteil (1) angeordneten Anschlussstellen (4) angeschlossen werden können, wobei den belegten Anschlusstellen mindestens je ein programmiertes Anschluss-Konfigurationsmodul (6, 11) zugeordnet werden kann, das dem Steuerungs-Prozessor (2) die erforderlichen Informationen über Art und Funktion des an der korrespondierenden Anschlussstelle (4) angeschlossenen Signalgebers oder Signalempfängers (5) liefert.

2. Verfahren nach Anspruch 1, **dadurch gekennzeichnet, dass** der Informationsfluss zwischen den Anschluss-Konfigurationsmodulen (6, 11) und dem Steuerungs-Prozessor (2) über ein Bus-System (7) erfolgt, wobei dieser Steuerungs-Prozessor auch ein einem Haupt-Prozessor untergeordneter Teil eines dezentralen Aufzugssteuerungsystems sein kann.

3. Verfahren nach Anspruch 2, **dadurch gekennzeichnet, dass** an das Bus-System (7) auch programmierte Instruktions-Konfigurationsmodule (10) ankoppelbar sind, die über dieses dem Steuerungs-Prozessor (2) anlagenspezifische Instruktionen liefern.

4. Verfahren nach Anspruch 3, **dadurch gekennzeichnet, dass** die Konfigurationsmodule (6, 10, 11) programmierbare Speicherchips oder Prozessorchips enthalten, deren programmierte Informationen vom Steuerungs-Prozessor (2) abgerufen werden können.

5. Verfahren nach Anspruch 4, **dadurch gekennzeichnet, dass** der Steuerungs-Prozessor (2) bei der Werksprogrammierung auch für die Verarbeitung von Prozessen programmiert wird, die im Falle von späteren Erweiterungen oder Anpassungen der Aufzugsanlage erforderlich werden könnten, und dass die Aktivierung solcher Prozesse, inklusive die Zuordnung der dazugehörenden Ein- und Ausgangssignale zu bestimmten Anschlussstellen (4), aufgrund der in den zusätzlich montierten Konfigurationsmodulen (9, 10, 11) enthaltenen Informationen erfolgt.

6. Verfahren nach Anspruch 4 oder 5, **dadurch gekennzeichnet, dass** zwischen jedem Anschluss-Konfigurationsmodul (6) und den Leitungen des Bus-Systems (7) ein Selektorschalter (9) vorhanden ist, mit dem diese Module über separate, mit den Anschlussstellen (4) korrespondierenden Selektorleitungen (8) vom Steuerungs-Prozessor (2) aktiviert oder deaktiviert werden können, dass bei Initialisierung der Aufzugsteuerung in einem ersten Schritt der Steuerungs-Prozessor (2) ein Reset-Kommando auf das die Konfigurationsmodule (9, 10) verbindende Bus-System (7) erzeugt, was alle auf dem Eingangs/Ausgangs-Bauteil (1) montierten Konfigurationsmodule veranlasst, ihre Adresse via Bus-System an den Steuerungs-Prozessor (2) zu melden, der diese Adressen registriert, dass in einem zweiten Schritt der Steuerungs-Prozessor über die erwähnten Selektorleitungen (8) nacheinander jedes Anschluss-Konfigurationsmodul kurz aktiviert und jeweils gleichzeitig ein Identifikationskommando auf das Bus-System (7) bewirkt, worauf das jeweils aktivierte Anschluss-Konfigurationsmodul (6) erneut seine Adresse an den Steuerungs-Prozessor (2) meldet, der daraus die Zuordnung dieses Anschluss-Konfigurationsmoduls zu einem seiner eigenen Einoder Ausgänge und der zugehörigen Anschlussstelle (4) erkennt und diese Zuordnung zusammen mit den in diesem Konfigurationsmodul (6) gespeicherten Instruktionen betreffend den angeschlossenen Signalgeber oder Signalempfänger registriert.

7. Verfahren nach Anspruch 4 oder 5, **dadurch gekennzeichnet, dass** als Anschluss-Konfigurationsmodule B (11) handelsübliche, sogenannte "Adressierbare Schalter" mit integriertem Datenspeicher verwendet werden, die über das Bus-System (7) mit dem Steuerungs-Prozessor (2) und über eine direkte Verbindungsleitung (12) mit der korrespondierenden Anschlussstelle (4) verbunden sind, wobei diese Anschluss-Konfigurationsmodule B (11) einerseits dem Steuerungs-Prozessor (2) gespeicherte Informationen über Art und Funktion der an den korrespondierenden Anschlussstellen (4) angeschlossen Signalgeber und Signalempfänger (5) liefern und andererseits vom Steuerungs-Prozessor (2) über das Bus-System (7) veranlasst werden können, über die direkte Verbindungsleitung (12) ein Ausgangssignal auf die korrespondierende Anschlussstelle (4) zu generieren oder ein dort anliegendes Signal zu erfassen und über das Bus-System (7) an den Steuerungs-Prozessor (2) zu melden.

8. Verfahren nach Anspruch 1, **dadurch gekennzeichnet, dass** die Konfigurationsmodule (9, 10, 11) als steckbare Einheiten ausgeführt und auf dem Eingangs/Ausgangs-Bauteil (1) in Steckplätze eingesteckbar sind, wobei.die Zuordnung der Anschluss-Konfigurationsmodul-Steckplätze zu ihren korrespondierenden Anschlussstellen (4) anhand von Markierungen erkennbar ist.

9. Verfahren nach Anspruch 1, **dadurch gekennzeichnet, dass** jede Steuerungsfunktion, für die ein Signalgeber oder ein Signalempfänger (5) anschliessbar ist, durch ein Kurzzeichen symbolisiert ist, und dass jedes Konfigurationsmodul (9, 10, 11) mit dem Kurzzeichen gekennzeichnet ist, das derjenigen Steuerungsfunktion entspricht, für die das Modul programmiert ist.

10. Verfahren nach Anspruch 5, **dadurch gekennzeichnet, dass** der Steuerungs-Prozessor (2) aufgrund der Zuordnung der eingesteckten Anschluss-Konfigurationsmodule (9, 11) zu den korrespondierenden Anschlussstellen sowie aufgrund der in diesen wie auch in den eingesteckten Instruktions-Konfigurationsmodulen (10) programmierten Instruktionen die erforderlichen Daten für den Ausdruck eines Schemas liefert, das die effektiv vorhandene Anschlusskonfiguration und die mittels Instruktions-Konfigurationsmodulen (10) definierten spezifischen Bedingungen dokumentiert.

## Claims

1. Method of configuring elevator controls which consists in essence of a control processor (2), an input/output module (1) with connection points (4) for decentrally arranged signal emitters and signal receivers (5), and of these signal emitters and signal receivers themselves,
**characterized in that** the external signal emitters and signal receivers (5) can be connected to freely selectable connection points (4) arranged on an input/output module (1), it being possible to assign to each of the occupied connection points a programmable connection configuration module (6,11) which delivers to the control processor (2) the requisite information concerning the type and function of the signal emitter or signal receiver (5) connected to the corresponding connection point (4).

2. Method according to Claim 1,
**characterized in that** the flow of information between the connection configuration modules (6,11) and the control processor (2) takes place via a bus system (7), it being possible for this control processor also to be part of a decentral elevator control system which is subordinated to a main processor.

3. Method according to Claim 2,
**characterized in that** programmable instruction configuration modules (10) can also be coupled to the bus system (7) and via it deliver installation-specific instructions to the control processor (2).

4. Method according to Claim 3,
**characterized in that**
the configuration modules (6,10,11) contain programmable memory chips or processor chips whose programmable information can be called up by the control processor (2).

5. Method according to Claim 4,
**characterized in that** the control processor (2), when programmed at the place of manufacture, is also programmed for the processing of processes which could become necessary in the event of subsequent extensions or modifications to the elevator installation, and that the activation of such processes, including assignment of the corresponding input and output signals to specific connection points (4), takes place on the basis of the information contained in the additionally installed configuration modules (9,10,11).

6. Method according to Claim 4 or 5,
**characterized in that**
between each connection configuration module (6) and the conductors of the bus system (7) there is a selector switch (9) with which these modules can be activated or deactivated by the control processor (2) via separate selector conductors (8) corresponding to the connection points (4),
that when the elevator control is initialized, in a first step the control processor (2) generates a reset command on the bus system (7) connecting the configuration modules (9,10), which causes all configuration modules mounted on the input/output module (1) to communicate their addresses via the bus system to the communication processor (2) which registers these addresses,
that in a second step the control processor, via the aforementioned selector conductors (8), briefly activates each connector configuration module in turn and in each case simultaneously effects an identification command on the bus system (7), whereupon the connection configuration module (6) which is activated in each case again sends it address to the control processor (2) which recognizes from it the assignment of this connection configuration module to one of its own inputs or outputs and which registers this assignment together with the instructions stored in this configuration module (6) regarding the connected signal emitters or signal receivers.

7. Method according to Claim 4 or 5,
**characterized in that**
for the connection configuration modules B (11), usual commercially available so-called "addressable switches" with integral data storage are used, which are connected via the bus system (7) to the control processor (2) and via a directly connecting conductor (12) to the corresponding connecting point (4), and that these connection configuration modules B (11) firstly deliver to the control processor (2) stored information concerning the type and function of the signal emitters and signal receivers connected to the corresponding contact points (4), and secondly can be caused by the control processor (2) via the bus system (7) to generate via the direct connection conductor (12) an output signal on the corresponding connection point (4) or to detect a signal present there and communicate it via the bus system (7) to the control processor (2).

8. Method according to Claim 1,
**characterized in that**
the configuration modules (9,10,11) are made as pluggable units and can be plugged into plug receptacles on the input/output module (1), the assignment of the connector configuration module plug receptacles to their corresponding connection points (4) being identifiable by means of markings.

9. Method according to Claim 1,
**characterized in that** each control function for which a signal emitter or signal receiver (5) can be connected is symbolized by an abbreviation, and that each configuration module (9,10,11) is designated by the abbreviation which corresponds to that control function for which the module is programmed.

10. Method according to Claim 5,
**characterized in that**
based on the assignment of the plugged-in connection configuration modules (9,11) to the corresponding connection points, as well as based on the instructions programmed in these and in the plugged-in instruction configuration modules (10), the control processor (2) delivers the requisite data for printing a schematic wiring diagram which documents the connection configuration actually present and the specific conditions defined by means of instruction configuration modules (10).

## Revendications

1. Procédé de configuration de commandes d'ascenseurs qui se composent essentiellement d'un processeur de commande (2), d'un composant d'entrée/sortie (1) avec des points de raccordement (4) pour des transmetteurs de signaux et des récepteurs de signaux (5) disposés de manière décentralisée, et de ces transmetteurs et récepteurs de signaux eux-mêmes,
**caractérisé en ce que** les transmetteurs et récepteurs de signaux extérieurs (5) peuvent être raccordés à des points de raccordement (4) pouvant être choisis librement et disposés sur un composant d'entrée/sortie (1), étant précisé qu'on peut attribuer à chaque point de raccordement posé au moins un module de configuration de raccordement programmé (6, 11) qui fournit au processeur de commande (2) les informations nécessaires sur le type et la fonction du transmetteur ou récepteur de signaux (5) raccordé au point de raccordement (4) correspondant.

2. Procédé selon la revendication 1, **caractérisé en ce que** le flux d'informations entre les modules de configuration de raccordement (6, 11) et le processeur de commande (2) se fait par l'intermédiaire d'un système de bus (7), ce processeur de commande pouvant aussi être une partie de système de commande d'ascenseur décentralisé asservie à un processeur principal.

3. Procédé selon la revendication 2, **caractérisé en ce qu'**on peut aussi coupler au système de bus (7) des modules de configuration d'instructions programmés (10) qui fournissent au processeur de commande (2), par l'intermédiaire dudit système de bus (7), des instructions spécifiques pour l'installation.

4. Procédé selon la revendication 3, **caractérisé en ce que** les modules de configuration (6, 10, 11) contiennent des puces mémoires ou des puces processeurs programmables dont les informations programmées peuvent être appelées par le processeur de commande (2).

5. Procédé selon la revendication 4, **caractérisé en ce que** le processeur de commande (2), lors de la programmation à l'usine, est aussi programmé pour le traitement de processus qui pourraient être nécessaires dans le cas d'extensions ou d'adaptations ultérieures de l'installation d'ascenseur, et **en ce que** l'activation de tels processus, y compris l'attribution des signaux d'entrée et de sortie correspondants à des points de raccordement (4) définis, se fait sur la base des informations contenues dans les modules de configuration (9, 10, 11) montés en supplément.

6. Procédé selon la revendication 4 ou 5, **caractérisé en ce qu'**il est prévu, entre chaque module de configuration de raccordement (6) et les lignes du système de bus (7), un interrupteur sélecteur (9) à l'aide duquel ces modules peuvent être activés ou désactivés par le processeur de commande (2) par l'intermédiaire de conducteurs sélecteurs (8) séparés correspondant avec les points de raccordement (4), **en ce que** lors de l'initialisation de la commande d'ascenseur, lors d'une première étape, le processeur de commande (2) génère une commande de remise à zéro destinée au système de bus (7) qui relie les modules de configuration (9, 10), ce qui amène tous les modules de configuration montés sur le composant d'entrée/sortie (1) à indiquer leur adresse, par l'intermédiaire du système de bus, au processeur de commande (2), lequel enregistre ces adresses, et **en ce que** lors d'une deuxième étape, le processeur de commande active brièvement les modules de configuration de raccordement les uns après les autres par l'intermédiaire desdits conducteurs sélecteurs (8) et provoque en même temps, à chaque fois, une commande d'identification destinée au système de bus (7), après quoi le module de configuration de raccordement (6) activé indique à nouveau son adresse au processeur de commande (2), qui reconnaît à partir de cette adresse l'attribution de ce module de configuration de raccordement à l'une de ses propres entrées ou sorties et au raccordement (4) correspondant et enregistre cette attribution avec les instructions mises en mémoire dans le module de configuration de raccordement (6) et concernant le transmetteur ou récepteur de signaux raccordé.

7. Processeur selon la revendication 4 ou 5, **caractérisé en ce qu'**on utilise comme modules de configuration de raccordement B (11) ce qu'on appelle des "interrupteurs adressables" du commerce avec une mémoire de données programmable intégrée, qui sont reliés par l'intermédiaire du système de bus (7) au processeur de commande (2), et par l'intermédiaire d'une ligne de liaison directe (12) au point de raccordement (4) correspondant, ces modules de configuration de raccordement B (11) fournissant d'une part au processeur de commande (2) des informations mises en mémoire sur le type et la fonction des transmetteurs et récepteurs de signaux (5) raccordés aux points de raccordement (4) correspondants, et pouvant d'autre part être amenés par le processeur de commande (2), par l'intermédiaire du système de bus (7), à générer par l'intermédiaire de la ligne de liaison directe (12) un signal de sortie destiné au point de raccordement (4) correspondant ou à détecter un signal présent à cet endroit et à l'indiquer par l'intermédiaire du système de bus (7) au processeur de commande (2).

8. Procédé selon la revendication 1, **caractérisé en ce que** les modules de configuration (9, 10, 11) sont conçus comme des unités enfichables et sont aptes à être enfichés dans des dispositifs d'enfichage sur le composant d'entrée/sortie (1), l'attribution des dispositifs d'enfichage de modules de configuration de raccordement à leurs points de raccordement (4) correspondants pouvant être identifiée grâce à des marquages.

9. Procédé selon la revendication 1, **caractérisé en ce que** chaque fonction de commande pour laquelle un transmetteur ou récepteur de signaux (5) est apte à être raccordé est symbolisé par un symbole, et **en ce que** chaque module de configuration (9, 10, 11) est **caractérisé par** le symbole correspondant à la fonction de commande pour laquelle le module est programmé.

10. Procédé selon la revendication 5, **caractérisé en ce que** le processeur de commande (2), sur la base de l'attribution des modules de configuration de raccordement enfichés (9, 11) aux points de raccordement correspondants, et sur la base des instructions programmées dans ces modules ainsi que dans les modules de configuration d'instructions enfichés (10), fournit les données nécessaires pour l'impression d'un schéma qui rend compte de la configuration de raccordement effectivement présente et des conditions spécifiques définies à l'aide des modules de configuration d'instructions (10).
